# EUROPEAN PATENT APPLICATION

(11) **EP 4 047 476 A1**
(43) Date of publication of application: **24.08.2022**
(21) Application number: 21157916.4
(22) Date of filing: 18.02.2021
(51) Int. Cl.: G06F 8/61, G06F 9/50

(54) **SYSTEMS AND METHODS FOR FACILITATING AUTHORIZATION OF COMPUTER PROGRAM INSTALLATION IN AN OPEN INDUSTRIAL ECOSYSTEM**

(71) Applicant: Siemens Aktiengesellschaft, 80333 München (DE)
(72) Inventor: Fischer, Jan-Gregor, 85604 Zorneding (DE)

(57) **Abstract**

A system comprising a first memory that resides at an industrial facility (100) and stores first machine-executable components, a first processor that resides at the industrial facility (100), is operatively coupled to the first memory, and is configured to execute the first machine-executable components, wherein the first machine-executable components comprise a cloud connectivity component (102), a second memory that resides at a cloud platform (200) and stores second machine-executable components, a second processor that resides at the cloud platform (200), is operatively coupled to the second memory, and is configured to execute the second machine-executable components, wherein the second machine-executable components comprise a management component (201), wherein the management component (201) belongs to an entity (P) that produced one or more industrial devices (101), wherein the one or more industrial devices (101) reside at the industrial facility (100), wherein the cloud connectivity component (102) is configured to receive and store at least one computer program (300) to be installed on the one or more industrial devices, the cloud connectivity component (102) and the management component (201) are configured to interact with one another such that during the interaction the management component (201) defines an allowed installation context and authorizes installation of the at least one computer program (300, 301) on the one or more industrial devices (101) only within the scope of the allowed installation context, wherein the interaction excludes sending the at least one computer program (300, 301) to the management component (201) .

## Description

The subject matter disclosed herein relates to systems and methods for facilitating authorization of computer program installation in an open industrial ecosystem.

In many cloud-based industrial ecosystems computer programs or simply apps are provided and stored at a cloud platform, which for example can be provided by a cloud provider as a platform-as-a-service (PaaS). The type of services provided are usually digitalization services regarding industry. The platform provider can also provide automations systems for industrial facilities.

In cases, when a customer, who bought provider's equipment for her/his industrial facility and is willing to use the cloud platform but has apps of her/his own that were developed by the customer or by a third party, uploading the apps to the cloud might be not acceptable for the customer. This can be for various reasons. For example, there can be certain know-how associated with the app, which the customer does not want to upload to the cloud of the open ecosystem.

From the provider's perspective, it is not favorable to have unknown apps running on her/his automation system devices. This can be for several reasons: it might considerably reduce the qualities of the automation device platform; affect configuration consistency, as configuration data needs to be distributed amongst automation industrial device (or simply edge device) and the cloud; no global planning / scheduling of resource consumptions and Edge App dependencies at deployment time in multi-app scenarios involving both ecosystem and customer apps; no quality control by platform provider over what is being deployed locally which can affect service license agreements and increase risk for fraud, unintended misuse and warranty-related issues / unjustified claims.

A sustainable solution for the above-mentioned dilemma is needed.

In order to achieve this objective, the present invention provides a system comprising a first memory that resides at an industrial facility and stores first machine-executable components and a first processor that resides at the industrial facility, is operatively coupled to the first memory, and is configured to execute the first machine-executable components. The first machine-executable components comprise a cloud connectivity component. The cloud connectivity component can be associated with a cloud agent device (or a cloud gateway) that resides at the industrial facility. The cloud connectivity component is configured to receive and store at least one computer program to be installed on one or more industrial devices that reside at the industrial facility. In an embodiment, the cloud connectivity component can store the at least one computer program in the first memory. The first memory can be a volatile or non-volatile memory. In an embodiment, the cloud connectivity component can be a software-component that resides at the cloud agent device. In an embodiment the cloud agent device can have a non-volatile memory, which is used as a storage for the at least one computer program.

The system further comprises a second memory that resides at a cloud platform and stores second machine-executable components, and a second processor that resides at the cloud platform, is operatively coupled to the second memory, and is configured to execute the second machine-executable components. The second machine-executable components comprise a management component. The management component belongs to an (e.g. legal) entity (provider) that produced the one or more industrial devices. This entity can be an entity providing digitalization and/or automation services for industry.

The cloud connectivity component and the management component are configured to interact with one another such that during the interaction the management component defines an allowed installation context and authorizes installation of the at least one computer program on the one or more industrial devices only within the scope of the allowed installation context, wherein the interaction excludes sending the at least one computer program to the management component.

The system allows the provider to receive knowledge about the computer programs to be installed on the one or more industrial devices in order to be able to ensure that the computer programs run properly on the one or more industrial devices. The system also ensures that no sensitive customer's data associated with the computer programs gets to the cloud. For example, the provider may have a service license agreement with the customer regarding the industrial devices and/or provide digitalization services to the customer including but not limited to analysis of data collected by the industrial devices, production optimization, etc.

In other words, the subject matter disclosed herein relates to provisioning and deploying of computer programs, for example, edge applications for industrial edge computing in open ecosystems involving two or more partners. It allows the partners to flexibly and securely manage the computer programs via the Internet, whereat it is not required to upload the computer programs, for example, if this is not allowed by one of the partner's IT-security measures, trust or performance reasons. At the same time - it allows the provider of the platform for managing the computer programs to check and decide on the deployability of each computer program according to their properties, runtime requirements and dependencies. This allows to avoid any negative effect to the industrial devices, on which the computer program(s) is (are) intended to run on, and other computer programs already running on the device.

In an embodiment, the management component configured to manage computer programs (e.g. app management component) can be a hardware or a software component or a combination of hardware and software. In an embodiment, the management component is a management backend server. In an embodiment, the industrial devices are edge devices and the management component is an edge management backend server.

In an embodiment, the industrial devices are edge devices, in particular, industrial computers located close to the machine controllers, sensors and actuators, and mediating between the communication networks of operational and information technology, being able to host and run downloadable applications for digitalization of physical assets on the shopfloor. In an embodiment, the physical assets on the shopfloor are production machines, robots, machine tool systems and devices for managing and transporting tools, workpieces, material and other production resources.

The at least one computer program does not have to be designed, developed, or owned by the provider of the management component. In an embodiment, the at least one computer program is not a program authorized by the entity, which the management component belongs to. In an embodiment the at least one computer program can be a proprietary of (and e.g. designed by) an entity (e.g. legal entity) that owes the industrial facility. In an embodiment the at least one computer program can be designed/developed by a third party (legally) unrelated either of the cloud platform provider or the owner of the industrial facility.

I.e. the invention covers the scenario, where provider of the management component and of the industrial devices and the owner of the industrial facility does not have to trust each other. The cloud connectivity component prevents the at least one computer program from being sent to the management component and, therefore, guarantees that no sensitive data (e.g. intellectual property related data) associated with the industrial facility and with the at least one computer program leaves the industrial facility. This also reduces the traffic between the industrial facility and the cloud. On the other hand, the provider of the management component and of the industrial devices can be sure that no unauthorized computer programs are deployed on the industrial devices. For example, this can simplify servicing and maintenance of the industrial devices and prolong their life cycle, because failures caused by running some unauthorized software on the industrial devices can be reduces or even completely avoided.

Moreover, the described herein allows to perform upfront planning of resource consumption on the one or more industrial devices.

The type of industry is at least one of automotive industry, an oil and gas industry, a food and drug industry, a marine industry, an aircraft industry, or a textiles industry.

As used in this application, the term "interact" is intended to refer to any type of interaction, which allows data exchange between the two parties (provider of the management component and of the industrial devices on the one hand and the owner of the industrial facility on the other), such that the data exchange is coordinated by these two parties. The parties can use for example any communication protocol they want, in order to interact with each other. For example, they can establish a quantum channel between the management component and the industrial facility and utilize one or more quantum communication protocols to enhance the security of the communication.

As used in this application, the term "cloud platform" is intended to refer to any infrastructure that allows cloud services to be accessed and utilized by cloud-capable devices. Cloud platform can be a public cloud accessible via the Internet by devices having Internet connectivity and appropriate authorizations to utilize the services. In some scenarios, cloud platform can be provided by a cloud provider as a platform-as-a-service (PaaS), and the services can reside and execute on the cloud platform as a cloud-based service. In some such configurations, access to the cloud platform and/or the services can be provided to customers as a subscription service by an owner of the services. Alternatively, cloud platform can be a private or semi-private cloud operated internally by the enterprise, or a shared or corporate cloud environment. An exemplary private cloud can comprise a set of servers hosting the cloud services and residing on a corporate network protected by a firewall. Such private or semi-private clouds are not within the scope of the present disclosure.

In an embodiment, the management component can define (can be configured to define) the allowed installation context in response to a data associated with an intended installation context provided by the cloud connectivity component to the management component.

In an embodiment, the cloud connectivity component can be further configured to:
control connectivity between the one or more industrial devices and the cloud platform, in particular, the management component at the cloud platform,
generate a metadata associated with the at least one computer program and with its intended installation on the one or more industrial devices,
sign the metadata by means of a first private key,
send an installation request to the management component,
wherein the installation request contains the signed metadata,
receive, from the management component, an authorized metadata, wherein the authorized metadata is signed by means of a second private key and is associated with the allowed installation context of the at least one computer program,
verify (regarding integrity and correctness of) the signed authorized metadata by means of a second public key,
sign the at least one computer program by means of the second private key.

In an embodiment, the allowed installation context can e.g. comprise (set of) rules for the at least one program's installation on the one or more industrial devices (i.e. the set of rules under which the at least one computer program is allowed to be installed on the one or more industrial devices).

In an embodiment, the management component can be configured to:
receive, at the cloud platform, the installation request from the cloud connectivity component,
verify the signed metadata by means of a first public key,
in response to the installation request and based on the signed metadata, generate the authorized metadata,
sign the authorized metadata by means of the second private key,
transmit the signed authorized metadata to the cloud connectivity component. Generating can comprise defining the authorized metadata.

In an embodiment, the first machine-executable components comprise the cloud connectivity component and the deployment component, and the second machine-executable components comprise the management component, wherein
the cloud connectivity component configured to:
control connectivity between the one or more industrial devices of the industrial facility and the management component at the cloud-platform,
receive and store the at least one computer program, in particular, the computer program not yet authorized by the management component, to be installed on the one or more industrial devices,
generate the metadata associated with the at least one computer program and with its intended installation on the one or more industrial devices,
digitally sign the metadata by means of the first private key,
send the installation request to the management component, wherein the installation request contains the signed metadata,
receive, from the management component, the authorized metadata, wherein the authorized metadata is signed by means of the second private key and is associated with the allowed installation context of the at least one computer program,
verify (e.g. regarding integrity and correctness of) the signed authorized metadata by means of the second public key,
sign the at least one computer program by means of the second private key,
the deployment component configured to
   verify the signed at least one computer program and the signed authorized metadata by means of the second public key, and
install (upon successful verification) and execute the at least one computer program on the one or more industrial devices according to the allowed installation context, and the management component configured to
receive, at the cloud platform, the installation request from the cloud connectivity component,
verify the signed metadata by means of the first public key, in response to the installation request and based on the signed metadata, generate the authorized metadata,
sign the authorized metadata by means of the second private key,
transmit the signed authorized metadata to the cloud connectivity component.

As used in this application, the term "sign" is intended to refer to any cryptographic protocol that allows to verify authenticity of the signed message. "Signing" can refer to one of but is not limited to digitally signing, signing by a quantum digital signature, etc.

As used in this application, the term "component" is intended to refer to a software component, a hardware component, or to a combination of both. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal).

In an embodiment, the cloud connectivity component can be further configured to transmit the signed at least one computer program and the signed authorized metadata to the one or more industrial devices, which the at least one computer program to be installed on.

In an embodiment, the metadata can include unique identification data associated with the at least one computer program (e.g. release information (name, date, version, development origin, e.g. URI and/or name and address of the developer (legal or natural entity), etc.) and/or unique identification data associated with installation target of the at least one computer program (e.g. data that uniquely identifies the industrial devices (URI, MAC ad-dress, data associated with its operational system (e.g. current version, another type of identifier, etc.), on which the at least one computer program shall be installed, etc.)

In an embodiment, the first machine-executable components can further comprise a deployment component. The deployment component can reside at or be stored on each of the one or more industrial devices. In an embodiment, the deployment component is configured to:
verify the signed at least one computer program and the signed authorized metadata by means of the second public key, and
install (upon successful verification and execute) the at least one computer program on the one or more industrial devices according to the allowed installation context. The industrial devices usually comprise a memory and a processor operatively coupled to the device's memory.

In an embodiment, the cloud connectivity component and the management component can be further configured to:
interact with one another such that during the interaction the management component also defines (e.g. in response to a receiving data associated with an intended runtime context provided by the cloud connectivity component to the management component) an allowed runtime context of the at least one computer program and authorizes execution of the at least one computer program on the one or more industrial devices only within the scope of the allowed runtime context (e.g. set of rules contained in the authorized metadata).

In an embodiment, the authorized metadata, generated by the management component, can include the allowed runtime context.

In an embodiment, the signed authorized metadata, generated and signed by the management component, can include the allowed runtime context.

In an embodiment, the allowed runtime context can e.g. comprise (set of) rules for the at least one program's runtime on the one or more industrial devices (i.e. the set of rules under which the at least one computer program is allowed to run / be executed on the one or more industrial devices).

In an embodiment, the first machine-executable components can further comprise a runtime enforcement component. Runtime enforcement is a powerful technique to ensure that a running system respects some desired properties. The runtime enforcement component can be configured to enforce the at least one computer program to adhere to the allowed runtime context, while the at least one computer program is executed on the one or more industrial devices.

In an embodiment, the management component is further configured to store (e.g. in the first memory) and/or provide one or more management component's owner computer programs.

In an embodiment, the management component is further configured to store (e.g. in the first memory) the allowed installation context and/or the allowed runtime context and/or the authorized metadata.

In this way the management component can control which computer programs are actually installed and/or running on the one or more industrial devices. This provides system quality on the industrial devices. The management component or its provider can use a situation-aware mechanism that allows declarative, fine-granular definitions of who can locally install which computer program with which runtime constraints when / in which situation. In addition, the management component or its provider can enforce that the computer program behaves as defined at runtime increasing dependability, stability and robustness of each industrial devices in multi-computer program / open computer program ecosystem operations. The management component provider can trace back issues on the industrial devices to a particular computer program and its developer for example for support, claim and warranty reasons.

In an embodiment, the at least one computer program (e.g. an app) can be signed by means of a third party's (e.g. developer's) private key and the cloud connectivity component can be further configured to verify the signature of the at least one computer program by means of a third party's public key.

In an embodiment, the cloud connectivity component can also be configured to store one or more of the above-mentioned cryptographic keys, e.g. management component's owner private and public keys (the second public and private keys) and/or developer's public key, etc.

Note that the keys of the management component owner, of the customer and of the developer should be stored in separate secure regions of the cloud connectivity component, so that the parties cannot see the private keys of each other.

In an embodiment, the keys can be stored in different components, wherein each of the components is accessible only to corresponding party, customer's component only to the customer and management component's owner only to the management component's owner.

In this way, the customer does not get access to the private key of the management component's owner and vice versa. In an embodiment, the cloud connectivity component can be further configured to relate the authorized metadata to the (locally stored) at least one computer program.

E.g. the cloud connectivity component can put the computer program and the corresponding metadata into a relation and to assess on the cloud connectivity component's level on behalf of the management component provider whether or not the computer program can be deployed to the one or more industrial devices.

In an embodiment, the metadata (e.g. signed by the customer) may include information signed by the developer, e.g. an ID of the computer program, ID, name, address of the developer etc.

In this way the management component provider can check whether the developer of the computer program is certified as trusted partner.

To achieve the objective mentioned above, the present invention also provides a method comprising:
receiving and storing, by a cloud connectivity component that resides at an industrial facility, at least one computer program (e.g. not yet authorized by the cloud platform) to be installed on one or more industrial devices that reside at the industrial facility,
interacting, by the cloud connectivity component, with a management component, wherein the management component belongs to an entity that produced the one or more industrial devices, such that during the interaction the management component defines an allowed installation context and authorizes installation of the at least one computer program on the one or more industrial devices only within the scope of the allowed installation context, wherein the interacting excludes sending the at least one computer program to the management component.

In an embodiment, the communication partners - the cloud connectivity component and the management component - can communicate with mutual integrity protection, e.g. over an encrypted communication channel.

In an embodiment, the interacting can comprise:
generating, by the cloud connectivity component, a metadata associated with the at least one computer program and with its intended installation on the one or more industrial devices,
signing, by the cloud connectivity component, the metadata by means of a first private key,
sending, by the cloud connectivity component, an installation request to the management component, wherein the installation request contains the signed metadata,
receiving, by the management component, the installation request from the cloud connectivity component,
verifying, by the management component, the signed metadata by means of a first public key,
in response to the installation request and based on the signed metadata, generating, by the management component, an authorized metadata associated with the allowed installation context of the at least one computer program, wherein, in particular, generating can comprise defining the authorized metadata,
signing, by the management component, the authorized metadata by means of a second private key,
transmitting, by the management component, the signed authorized metadata to the cloud connectivity component,
receiving, by the cloud connectivity component, the authorized metadata from the management component,
verifying, by the cloud connectivity component, (regarding integrity and correctness of) the signed authorized metadata by means of a second public key,
signing, by the cloud connectivity component, the at least one computer program by means of the second private key.

In an embodiment, the method can further comprise transmitting, by the cloud connectivity component, the signed at least one computer program and the signed authorized metadata to the one or more industrial devices, which the at least one computer program to be installed on.

In an embodiment, the method can further comprise verifying, by a deployment component that resides at the industrial facility, the signed at least one computer program and the signed authorized metadata by means of the second public key, and
installing, in particular, upon successful verification, and executing, by the deployment component, the at least one computer program on the one or more industrial devices according to the allowed installation context.

In an embodiment, the method can further comprise interacting, by the cloud connectivity component, with a management component such that during the interaction the management component also defines an allowed runtime context of the at least one computer program and authorizes execution of the at least one computer program on the one or more industrial devices only within the scope of the allowed runtime context.

In an embodiment, the method can further comprise, while the at least one computer program is executed on the one or more industrial devices, enforcing, by a runtime enforcement component that resides at the industrial facility, the at least one computer program to adhere to the allowed runtime context.

In an embodiment, the runtime enforcement component can reside on the one or more industrial devices, more particularly, runtime enforcement component can comprise a plurality of subcomponents, wherein each subcomponent resides on an industrial device and different subcomponent reside on different devices.

In an embodiment, the method can further comprise signing, in particular, digitally signing, by a third party's component that resides neither at the industrial facility nor at the cloud platform, the at least one computer program by means of a third party's private key, and verifying, by the cloud connectivity component, the signature of the at least one computer program by means of a third party's public key.

The above and other objects and advantages of the invention will be apparent upon consideration of the following detailed description of certain aspects indicating only a few possible ways which can be practiced. The description is taken in conjunction with the accompanying drawings, in which like reference characters refer to like parts throughout, and in which:
- FIG 1: is an overview of a system that uses a cloud infrastructure to authorize third party's apps for installing and executing them at customer manufacturing sites,
- FIG 2: is a flowchart of an example methodology for facilitating secure authorization, installation and execution of third party's apps on customer manufacturing sites.

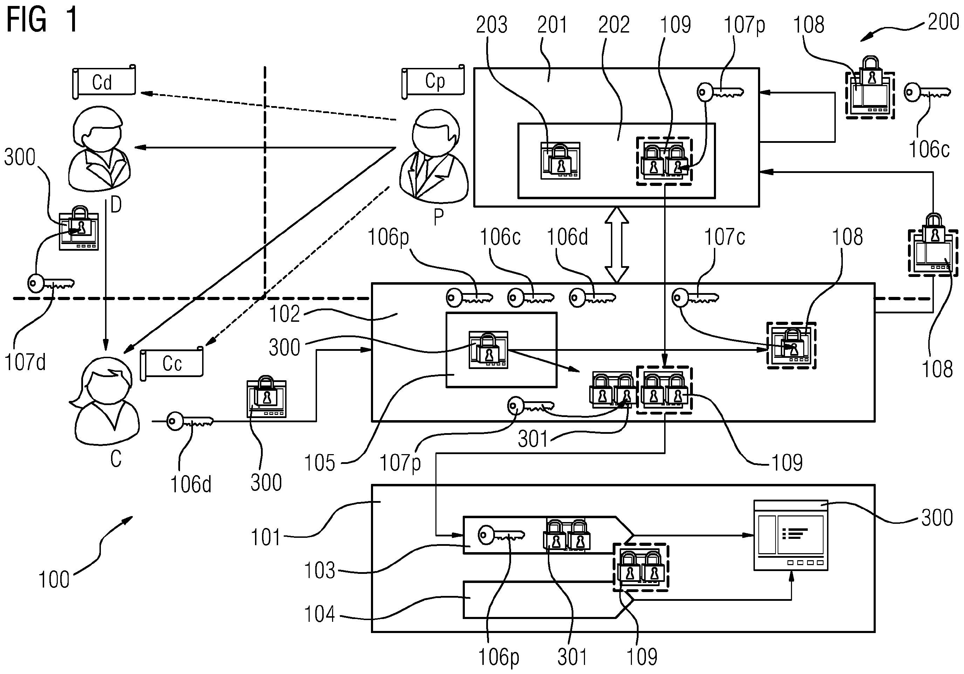

FIG 1 depicts three parties C (customer), D (developer) and P (provider) participating in a cloud-based ecosystem. Customer C has an enterprise. The enterprise can comprise one or more manufacturing sites (customer premises). For simplicity, FIG 1 depicts only one manufacturing site 100. The manufacturing site 100 comprise one or more edge devices 101. For simplicity, only one edge device is shown. It will be appreciated, that the disclosed herein is valid for multiple devices. Each edge device 101 can run an edge device software platform. Edge devices 101 can make up one or more automation systems operating within the manufacturing site 100.

Each edge device 101 can be configured to collect and/or process data from the one or more automation systems, in particular, from one or more industrial machines.

In an exemplary configuration, the edge devices 101 may access edge management backend server 201 that resides at a cloud platform 200 through a separate cloud gateway 102 at the manufacturing site, where the edge device 101 connect to the cloud gateway 102 through a physical or wireless local area network or radio link. It will be appreciated, that the manufacturing site 100 can have more than one cloud gateway, which control connectivity between the respective edge devices 101 and the edge management backend server 201. Cloud gateway 102 may also comprise an integrated component of a network infrastructure device, such as a firewall box, router, or switch.

In the depicted setting, the provider P owns the edge management backend server 201 and is also a manufacturer of the edge devices 101. The customer C purchased the edge devices 101 from P. C and P may also have a service license agreement. C can use edge management backend server 201 resources to process the data from the manufacturing process. P has to perform maintaining and servicing of the edge devices 101.

The developer D is a third party in this scenario. The developer D develops edge apps 300 that the customer wishes to use.

The provider P (e.g. representing an edge computing ecosystem owner) may hold a signing certificate Cp and issue signing certificates Cd and Cc(e.g. together with an ecosystem partnering license) to the developer D and to the customer C. Developer D and Customer C (or subsets of each) can optionally represent the same legal entity (e.g. if a customer C has software developers that are developing own edge apps). The certificates can be used by the developer D and by the customer C to cryptographically sign data, e.g. edge app, metadata associated with edge apps etc.

It will be appreciated that the term "provider", "customer", "developer" may also refer to many different providers, customers or developers.

The edge management backend server 201 may comprise a storage 202 for storing one or more edge apps 203 that can be developed and/or certified by the provider P.

Each edge device 101 is e.g. produced by the provider P may comprise an edge app deployment component 103 that can install and start edge apps on the edge device 101. The edge app deployment component 103 installs the edge apps according to an allowed installation context as defined by the edge management backend server's 201 provider P.

Moreover, each edge device may comprise a runtime enforcement component 104 that guarantees that the deployed edge app is adhering to restrictions - to an allowed runtime context - as defined by the edge management backend server's 201 provider P.

The cloud gateway 102 resides at the customer premises - at the manufacturing facility 100. The cloud gateway 102 allows the customer C to control connectivity between the edge device(s) 101 and the cloud 200.

The cloud gateway may comprise a storage component 105. The storage component 105 can receive and store edge apps (industrial computer program) that shall be installed on the edge devices 101. For example, it can receive (from the developer D) and store an edge app 300 developed and signed by the developer D. The storage component 105 can be a non-volatile memory.

The storage component 105 can also store cryptographic keys of the developer D and of the provider P. For example, public keys of the developer 106d, of the provider 106p and of the customer 106c can be stored by the storage component 105. For reasons explained below the storage component 105 can also store a provider's P private key 107p and/or the customer's C private key 107c. The developer's D private key 107d can stay with the developer D. The developer D can use his key 107d to sign the apps.

The cloud gateway 102 can be configured to generate app metadata that describes the signed edge app 300 for reasons of identifying the signed edge app 300 and for defining its intended installation and runtime context. It will be appreciated, that the cloud gateway 102 can be configured to generate a metadata not only for the signed edge app 300 but for any other edge app.

The app metadata information (e.g. a JSON or XML file) may include but not limited to the following information as intended installation context: unique edge app / version identifier (e.g. an URI that identifies an edge app-specific version), unique identifier of the origin of the edge app (e.g. an URI or fully specified name and address of the developer D and/or his public cryptographic key as legal entity - this information typically uniquely identifies the edge app developer D), signature of the app developer D that e.g. verifies that this particular app has been developed by the developer D. The app metadata may further include requested installation target information, e.g. identification of one or multiple edge devices 101 of the customer C as target for installing the edge app 300, e.g. in form of a (set) of URI(s) and optionally edge device's 101 software platform variant and / or software version information and/or real or technical user(s) installing the edge app 300 and/or intended time or situation of installation (e.g. "in calendar week 30" or "during an edge device 101 evaluation / piloting phase").

Furthermore, the app metadata comprises the intended runtime context, e.g. it may include but not limited to the edge app 300 functionality constraints (e.g. allowed users of the edge app 300, request for opening the edge device 101 firewall port to the shop floor network, request for reading from / writing data to a machine controller or to any other edge app or to an on-premises / cloud IoT data backend, request for feeding back data to a machine for control, or for displaying information on the machine HMI, etc.); and/or edge app 300 quality constraints (e.g. type, data rate, resolution and other qualities of requested data access and provisioning like high frequency / high quality machine data, big data uploads to a cloud, requested Edge device resource quotas such as 2GB main memory or request to use a full CPU core in a certain Edge app runtime situation).

In a preferred embodiment these the intended installation and runtime context is specified in a declarative constraint or semantic description instance data model using a constraint specification language or a formal description logic based on a common, shared constraint model / ontology defining the concepts and allowed properties such as the concrete examples given above.

The cloud gateway 102 can also cryptographically sign the app metadata for identification and integrity protection reasons with the private key 107c owned by the customer C and provide the signed app metadata 108 to the edge management backend server 201.

The edge management backend server 201 can be configured to receive the signed app metadata 108 which includes the app's intended installation and runtime context. However, the edge management backend server 201 never receives the developer's signed app 300, so, for example, the provider P can never reverse engineer and see the app's source code.

Furthermore, the edge management backend server 201 can be configured to verify the customer's C signature for integrity reasons and the requested installation context of the corresponding edge app optionally including the identification of D. This can be performed in an automated way by performing a matchmaking in form of a reasoning process that maps the requested items and their properties to a set of corresponding acceptable items and their properties - the latter specified by the platform provider P. This specification defines, for the customer C the allowed installation and runtime context for the edge app 300. In a preferred embodiment, the matchmaking can be performed by constraint reasoning or description logics reasoning analyzing whether the requested intended installation and runtime context matches the allowed installation and runtime context for the requested edge app installation.

For example, the intended context may be:
∘Edge app "X" in version "1.0" developed by developer "D"
∘Installation target: single edge device "E1" in production hall "10"
∘Time / situation of local installation: during customer-specific piloting phase
∘User installing the Edge app: technical user owned by "C1" and identified by URL "www.someCustomer.com/edgeAppInstallationJob4711"
∘App runtime context: "Edge device firewall to shop floor network needs to be opened for IP address "192.168.178.25" on port "62222" to allow the Edge app to receive data from an Edge-external OPC UA Pub/Sub communication partner with ultra-high frequency sensor quality ("ultra-high frequency" can be specified in the constraint model / ontology as any kind of time-series data that is received with a frequency of minimum "48.000" data points per second in this specific example).

For example, the allowed context may be:
∘"C" is allowed to locally install all versions of Edge apps "X", "Y" and "Z" - all developed only by "D"
∘Installation target: all Edge devices owned by "C" and deployed in production halls "10" or "15"
∘Installation time: timespan between April and October 2021, which is a semantic definition of the piloting phase for "C" in this specific example.
∘User installing the edge app: all real and technical users legally related to "C"
∘App runtime context: the edge device firewall is allowed to be opened for all IP addresses in local shop floor networks ("local shop floor networks" defined in the constraint model / ontology as IPv4 network IP ranges starting with an "192" in this example) with port range "4000-5000" and allowed network bandwidth up to 8Mbyte / second from all kinds of OPC UA-related communication partners (which - in this specific example - includes a data frequency of max. "100.000" data points from an OPC UA PubSub partner according to a related proper definition of semantics in the constraint model / ontology).

This example illustrates the high flexibility of semantic modelling (integrating provider P and customer C semantics by constraint-based mapping policies or description-logics-based axioms in a preferred embodiment). This example results in a successful matchmaking between the requested/intended and allowed installation and runtime context thus allowing a technical user of "C" to install "X" on "E1" in production hall "10" with the requested connectivity scenario for delivering ultra-high frequency sensor data to the edge app during the customer piloting phase.

The edge management backend server 201 can be configured to cryptographically re-sign the app metadata 108 using provider's P private key 107p after the above-mentioned verification. This results in acceptance of the local installation according to the specified situation. The edge management backend server 201 can be configured to store a copy the double-signed app metadata 109 including the allowed installation and runtime context in the storage 202 and send another copy to the cloud gateway 102.

The cloud gateway 102 can be configured to receive the double-signed edge app metadata 109 which includes the allowed installation and runtime context for the developer's D edge app 300 and to relate the double-signed edge app metadata to the developer's D edge app 300 that is stored by the storage component 105, e.g. on the cloud gateway 102.

The cloud gateway 102 can be also configured to verify the integrity and correctness of the signed edge app 300, the double-signed app metadata 109 which contains the allowed installation and runtime context and to cryptographically sign the signed edge app 300 with the private key 107p of the provider P. Verifying the correctness of the signed edge app 300 and of the double-signed app metadata 109 may include checking whether the signed edge app 300 is still available from the storage component 105, is still integer according to the signature of D, the double-signed app metadata 109 is integer according to the signatures of the provider P and of the customer C, the target edge device(s) 101 is / are available (up and running), the time / situation and all the other characteristics defined in the allowed installation and runtime context can actually be matched. In a preferred embodiment, the cloud gateway 102 may use constraint-based or description logics-based reasoning for understanding the current situation and for performing matchmaking with the allowed installation and runtime context. The result of this step can be an acceptance or rejection of the installation of the edge app 300 on the edge device 101 at the moment of the verification.

The cloud gateway 102 can be also configured to transmit the (double-signed) developer's D edge app 301 to the edge device 101 and/or to initiate the installation of the edge app on the edge device 101.

The edge app deployment component 103 can be configured to verify integrity of the (double-signed) edge app 301 and of the corresponding metadata 109 by using the provider's P public key 106p and to install the edge app 301 on the device 101. The edge app deployment component can be further configured to register the allowed runtime context from the double-signed app metadata 109 with the runtime enforcement component 104. If the verification of the edge app 301 is failed, no installation is performed and an error message can be issued.

The runtime enforcement component can be configured to check the runtime context of the edge app 301 and to make sure that it does not leave the allowed runtime context as specified in the app metadata 109. This may include but not limited to checking and controlling that the edge app 301 does not send more data or consume more edge device 101 resources than allowed by the provider P. This enforcement ensures system and network stability in multi-app scenarios and raises resource availability and IT security especially in open edge app ecosystems. This check and control (i.e. enforcement of app runtime constraints) can be performed on event (i.e. in the event of a change of the actual runtime context), periodically or continuously. In case the actual runtime context changes in a way that violates the allowed app runtime context the runtime enforcement component 104 may restrict or stop the edge app 301 and optionally send an error / alert message to a real or technical user on customer's C (and optionally provider's P side) for information or further treating with the situation.

In an embodiment, all connections and exchanged data between each two communication partners of the described system and method can be (e.g. quantum) cryptographically encrypted for data privacy reasons.

In an embodiment, the above-mentioned activities can be logged into an audit trail for transparency and / or legal non-repudiation reasons.

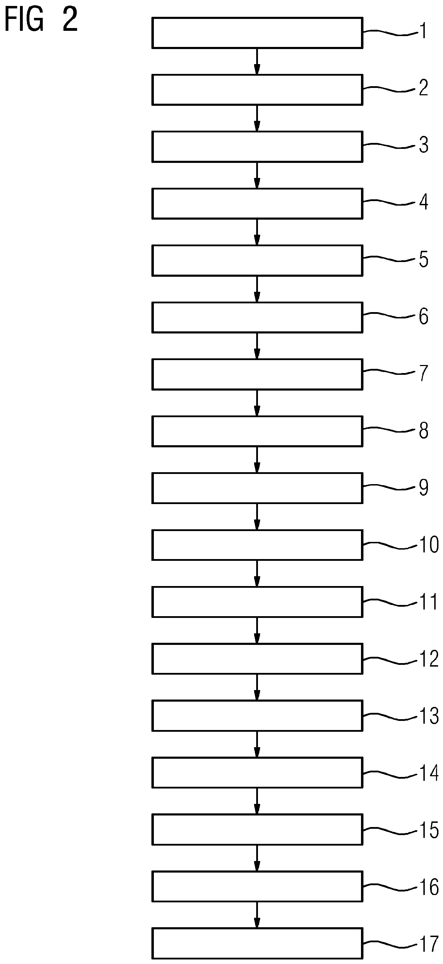

FIG 2 illustrates a flowchart of an example methodology for facilitating secure authorization, installation and execution of third party's apps on customer manufacturing sites. The below example can be implemented within the framework described with regard to FIG 1. Some of the arrows in FIG 1 illustrate steps of the methodology of FIG 2.

The method comprises:
Step 1: Developing, signing and sending, by the developer D, of an edge app 300 to be installed and run on the customer's C edge device 101.
Step 2: receiving and storing, by the storage component 105, of the signed edge app 300 at the cloud gateway 102.
Step 3: generating, by the cloud gateway 102, a metadata associated with the edge app 300 and with its intended installation and runtime on the edge device 101.
Step 4: signing, by the cloud gateway 102, the metadata by means of customer's private key 107c.
Step 5: sending, by the cloud gateway 102, an installation request to the edge management backend server 201, wherein the installation request contains the signed metadata 108.
Step 6: receiving, by the edge management backend server 201, the installation request from the cloud gateway 102.
Step 7: verifying, by the edge management backend server 201, the signed metadata 108 by means of the customer's public key 106c.
Step 8: in response to the installation request and based on the signed metadata 108, generating, by the edge management backend server 201, an authorized metadata associated with the allowed installation and runtime context of the edge app 300.
Step 9: signing, by the edge management backend server 201, the authorized metadata by means of the provider's private key 107p.
Step 10: transmitting, by the edge management backend server 201, the (double-)signed authorized metadata 109 to the cloud gateway 102.
Step 11: receiving, by the cloud gateway 102, the authorized metadata 109 from the edge management backend server 201.
Step 12: verifying, by the cloud gateway 102, the signed authorized metadata 109 by means of the provider's public key 106p.
Step 13: (upon successful verification) signing, by the cloud gateway 102, the edge app 300 by means of the provider's private key 107p.
Step 14: transmitting, by the cloud gateway 102, the double-signed edge app 301 and the (double-)signed authorized metadata 109 to the edge device 101.
Step 15: verifying, by edge app deployment component 103, the double-signed edge app 301 and the (double-)signed authorized metadata 109 by means of the provider's public key 106p.
Step 16: installing and executing, by edge app deployment component 103, the double-signed edge app 301 on the edge device 101 according to the allowed installation context.
Step 17: while the at least one computer program is executed on the edge device 101, enforcing, by the runtime enforcement component 104, the edge app 301 to adhere to the allowed runtime context.

The above described embodiments of the present disclosure are presented for purposes of illustration and not of limitation. In particular, the embodiments described with regard to figures are only few examples of the embodiments described in the introductory part. In particular, technical features that are described with regard to systems can be applied to methods and vice versa.

## Claims

1. A system comprising:
a first memory that resides at an industrial facility (100) and stores first machine-executable components,
a first processor that resides at the industrial facility (100), is operatively coupled to the first memory, and is configured to execute the first machine-executable components, wherein the first machine-executable components comprise
a cloud connectivity component (102),
a second memory that resides at a cloud platform (200) and stores second machine-executable components,
a second processor that resides at the cloud platform (200), is operatively coupled to the second memory, and is configured to execute the second machine-executable components, wherein the second machine-executable components comprise
a management component (201), wherein the management component (201) belongs to an entity (P) that produced one or more industrial devices (101), wherein the one or more industrial devices (101) reside at the industrial facility (100), wherein
the cloud connectivity component (102) is configured to receive and store at least one computer program (300) to be installed on the one or more industrial devices (101),
the cloud connectivity component (102) and the management component (201) are configured to interact with one another such that during the interaction the management component (201) defines an allowed installation context and authorizes installation of the at least one computer program (300, 301) on the one or more industrial devices (101) only within the scope of the allowed installation context, wherein the interaction excludes sending the at least one computer program (300, 301) to the management component (201).

2. The system of Claim 1, wherein
the cloud connectivity (102) component is further configured to:
control connectivity between the one or more industrial devices (101) and the cloud-platform (200),
generate a metadata associated with the at least one computer program (300) and with its intended installation on the one or more industrial devices (101),
sign the metadata by means of a first private key (107c),
send an installation request to the management component (201), wherein the installation request contains the signed metadata (108),
receive, from the management component (201), an authorized metadata (109), wherein the authorized metadata is signed by means of a second private key (107p) and is associated with the allowed installation context of the at least one computer program (300),
verify the signed authorized metadata (109) by means of a second public key (106p),
sign the at least one computer program (300) by means of the second private key (107p),
the management component (201) configured to
receive, at the cloud platform (200), the installation request from the cloud connectivity component (102),
verify the signed metadata (108) by means of a first public key (106c),
in response to the installation request and based on the signed metadata (108), generate the authorized metadata,
sign the authorized metadata by means of the second private key (107p),
transmit the signed authorized metadata (109) to the cloud connectivity component (102).

3. The system of Claim 2, wherein the first machine-executable components further comprise
a deployment component (103) configured to:
verify the signed at least one computer program (301) and the signed authorized metadata (109) by means of the second public key (106p), and
install the at least one computer program (301) on the one or more industrial devices (101) according to the allowed installation context.

4. The system of any one of Claims 1 to 3, wherein the cloud connectivity component (102) and the management component (201) are further configured to:
interact with one another such that during the interaction the management component (201) also defines an allowed runtime context of the at least one computer program (300, 301) and authorizes execution of the at least one computer program (300, 301) on the one or more industrial devices (101) only within the scope of the allowed runtime context.

5. The system of Claim 4, wherein the first machine-executable components further comprise a runtime enforcement component (104) configured to:
while the at least one computer program (301) is executed on the one or more industrial devices (101), enforce the at least one computer program (301) to adhere to the allowed runtime context.

6. The system of any one of Claims 1 to 5, wherein the at least one computer program (300) is signed by means of a third party's (D) private key (107d) and the cloud connectivity component (102) is further configured to verify the signature of the at least one computer program (300) by means of a third party's public key (106d).

7. A method comprising:
receiving and storing, by a cloud connectivity component (102) that resides at an industrial facility (100), at least one computer program (300) to be installed on one or more industrial devices (101) that reside at the industrial facility (100),
interacting, by the cloud connectivity component (102), with a management component (201), wherein the management component (201) belongs to an entity (P) that produced the one or more industrial devices (101), such that during the interaction the management component (201) defines an allowed installation context and authorizes installation of the at least one computer program (300) on the one or more industrial devices (101) only within the scope of the allowed installation context, wherein the interacting excludes sending the at least one computer program (300) to the management component (201).

8. The method of Claim 7, wherein the interacting comprises :
generating, by the cloud connectivity component (102), a metadata associated with the at least one computer program (300) and with its intended installation on the one or more industrial devices (101),
signing, by the cloud connectivity component (102), the metadata by means of a first private key (107c),
sending, by the cloud connectivity component (102), an installation request to the management component (201), wherein the installation request contains the signed metadata (108),
receiving, by the management component (201), the installation request from the cloud connectivity component (102),
verifying, by the management component (201), the signed metadata (108) by means of a first public key (106c),
in response to the installation request and based on the signed metadata (108), generating, by the management component (201), an authorized metadata associated with the allowed installation context of the at least one computer program (300),
signing, by the management component (201), the authorized metadata by means of a second private key (107p),
transmitting, by the management component (201), the signed authorized metadata (109) to the cloud connectivity component (102),
receiving, by the cloud connectivity component (102), the signed authorized metadata (109) from the management component (201),
verifying, by the cloud connectivity component (102), the signed authorized metadata (109) by means of a second public key (106p),
signing, by the cloud connectivity component (102), the at least one computer program (300) by means of the second private key (107p).

9. The method of Claim 8, further comprising:
transmitting, by the cloud connectivity component (102), the signed at least one computer program (301) and the signed authorized metadata (109) to the one or more industrial devices (101), which the at least one computer program (300) to be installed on.

10. The method of Claim 8 or 9, further comprising:
verifying, by a deployment component (103) that resides at the industrial facility (100), the signed at least one computer program (301) and the signed authorized metadata (109) by means of the second public key (106p),
installing and executing, by the deployment component (103), the at least one computer program (301) on the one or more industrial devices (101) according to the allowed installation context.

11. The method of any one of Claims 7 to 10 further comprising:
interacting, by the cloud connectivity component (102), with a management component (201) such that during the interaction the management component (201) also defines an allowed runtime context of the at least one computer program (300) and authorizes execution of the at least one computer program (300) on the one or more industrial devices (101) only within the scope of the allowed runtime context.

12. The method of Claim 11 further comprising:
while the at least one computer program (300) is executed on the one or more industrial devices (101), enforcing, by a runtime enforcement component (104) that resides at the industrial facility (100), the at least one computer program (300) to adhere to the allowed runtime context.

13. The method of any one of Claims 7 to 12 further comprising:
storing, by the management component (201), the allowed installation context at the cloud platform (200).

14. The method of Claim 11 or 12 further comprising:
storing, by the management component (201), the allowed runtime context and/or the allowed installation context at the cloud platform (200).

15. The method of any one of Claims 7 to 14 further comprising:
signing, by a third party's component that resides neither at the industrial facility (100) nor at the cloud platform (200), the at least one computer program (300) by means of a third party's private key (107d),
verifying, by the cloud connectivity component (102), the signature of the at least one computer program (300) by means of a third party's public key (106d).
